# EUROPEAN PATENT APPLICATION

(11) **EP 1 516 709 A1**
(43) Date of publication of application: **23.03.2005**
(21) Application number: 04021736.6
(22) Date of filing: 13.09.2004
(51) Int. Cl.: B28D 1/06, B23D 49/00, B23D 51/12

(54) **Cutting blades frame for the cutting of stone blocks**

(30) Priority: 22.09.2003 IT VR20030111
(71) Applicant: Oliosi, Renato, 37060 Sona - Fraz. San Giorgio in Salici (Prov. of Verona) (IT)
(72) Inventor: Oliosi, Renato, 37060 Sona - Fraz. San Giorgio in Salici (Prov. of Verona) (IT)
(74) Representative: Modiano, Guido, Dr.-Ing.

(57) **Abstract**

A cutting frame (1) particularly for blocks of stone or the like, comprising a supporting framework (2) for at least two cutting blades (3) and elements for moving the at least two cutting blades with respect to the blocks being worked, further comprising a first blade holder assembly (4) and a second blade holder assembly (5), which respectively comprise two devices (6a, 6b, 7a, 7b) for connection to respective axial end portions (3a) of at least one respective blade, the connection devices being supported by the supporting framework (2) and being movable with a back-and-forth translational motion in a direction that is substantially parallel to the extension of the respective blade or blades; each one of the connection devices is associated with at least one respective tensioning and movement piston (8), which can slide within a respective tensioning and movement chamber (9), tensioning and movement chambers associated with devices for connecting corresponding end portions being connected by way of fluid connection elements (10).

## Description

The present invention relates to a cutting frame particularly suitable for stone blocks, such as for example blocks of marble, granite, rock, stone or the like.

Cutting frames are known which are substantially composed of:
- a blade supporting framework;
- one or more cutting blades, which are parallel, arranged side by side, and supported by the blade supporting framework, and in which the cutting edges of the blades are directed towards the block or blocks being worked;
- means for guiding and supporting the blade supporting framework, so that the framework, and accordingly the blades, can be moved alternately in both directions along the longitudinal direction of the cutting edges;
- means for moving the blade supporting framework with respect to the block or blocks being worked, so as to allow the blades to penetrate through the blocks.

A strongly felt need is to ensure, together with the movement of the blades, their tensioning so as to ensure an efficient cutting action.

In the frames described above, blade tensioning is achieved substantially in two manners.

According to a first constructive solution, the blades are supported, at both ends, by a stem that supports a piston and is designed, as a consequence of the reciprocating motion of the blades, to slide within a cylinder. The two cylinders are connected by means of a duct, which is generally arc-shaped and is arranged above the blades during use.

Oil flows within the cylinders and the duct, as a consequence of the reciprocating motion of the blades, and allows to keep constant the tension of said blades during cutting operations.

A second solution to the blade tensioning problem has been achieved by connecting the end cylinders, within which the stems that support the blades slide, to a respective tensioning cylinder, which is arranged above the end cylinders. A respective piston slides within the tensioning cylinders and is connected to a supporting stem for a blade element, which is not designed to cut the block, since it is arranged on the vertical of the blade that is performing the cut, but to keep constant the pressure inside the tensioning cylinders (and therefore the end cylinders), thus allowing the correct tensioning of the cutting blades.

These known devices, though being widely used at present, are not free from drawbacks.

First of all, it should be noted that the first proposed solution requires, for correct operation, a continuous and massive transfer of oil through the upper duct, with a consequent increase in consumption.

As regards the second solution, it does not allow to space at will the cutting blades if multiple cuts are to be performed for each pass.

If the blades are moved so as to work away from the axis of the stem, the resulting tensioning force produces a flexural moment on the stem, consequently making it assume an arc-like shape.

Clearly, the drawback described above is significant, since in practice it renders the frame unusable.

The aim of the present invention is to eliminate or at least drastically reduce the drawbacks noted above in known types of cutting frame.

Within this aim, an object of the present invention is to provide a cutting frame that allows to increase productivity significantly.

Another object of the invention is to provide a cutting frame that can offer higher operating reliability than those currently commercially available.

Another object of the present invention is to provide a cutting frame that allows to space at will the cutting blades without thereby causing drawbacks regarding the tensioning of said blades.

A further object of the present invention is to provide a cutting frame that has a very simple structure and is highly durable and easy to use.

A still further object is to provide a cutting frame that has a low consumption and low cost, so that it is advantageous also from an economical standpoint.

This aim and these and other objects that will become better apparent hereinafter are achieved by a cutting frame according to the invention, comprising a supporting framework for at least two cutting blades and means for moving said at least two cutting blades with respect to the blocks being worked, characterized in that it comprises a first blade holder assembly and a second blade holder assembly, which respectively comprise two devices for connection to respective axial end portions of at least one respective blade, said connection devices being supported by said supporting framework and being movable with a back-and-forth translational motion in a direction that is substantially parallel to the extension of said at least one respective blade, each one of said connection devices being associated with at least one respective tensioning and movement piston, which can slide within a respective tensioning and movement chamber, tensioning and movement chambers associated with said connection devices for connecting corresponding end portions being connected by way of fluid connection means.

Advantageously, in a cutting frame according to the present invention the connection devices comprise a carriage element that supports, at a first end portion, an engagement device for said axial end portion of said at least one blade, and supports, substantially at the second end portion, an abutment element for a tensioning stem that is connected to the respective actuation and movement piston.

Conveniently, a cutting frame according to the invention also comprises a guiding and support device that is interposed between the carriage element and the supporting framework.

Further characteristics and advantages of the invention will become better apparent from the description of some preferred but not exclusive embodiments of a cutting frame according to the invention, illustrated by way of non-limiting example in the accompanying drawings, wherein:
Figure 1 is a kinematic diagram of a cutting frame according to the present invention;
Figure 2 is a side elevation view of a portion of a cutting frame;

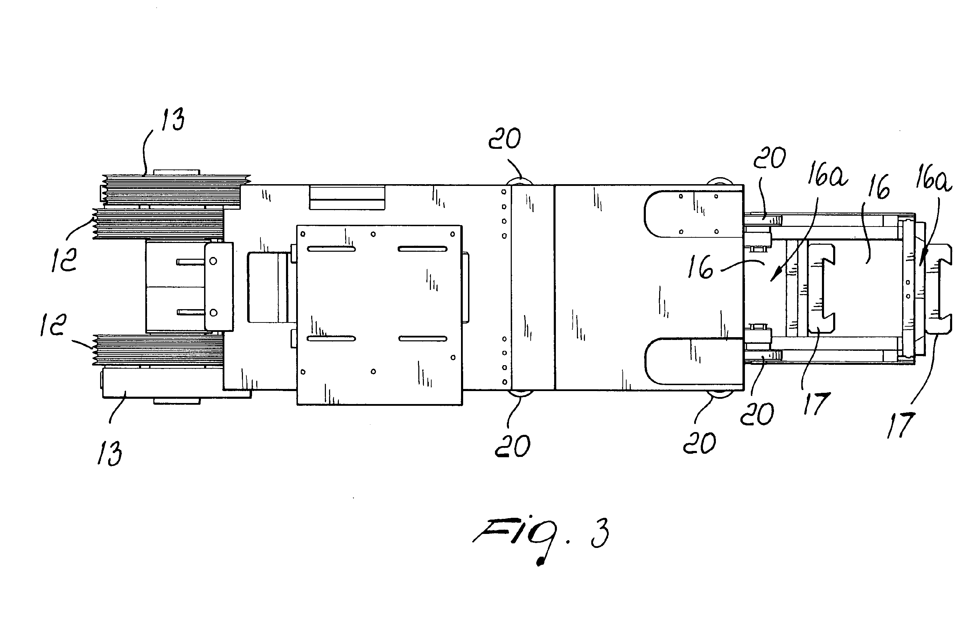

Figure 3 is a top plan view of the same portion of the cutting frame shown in Figure 2;

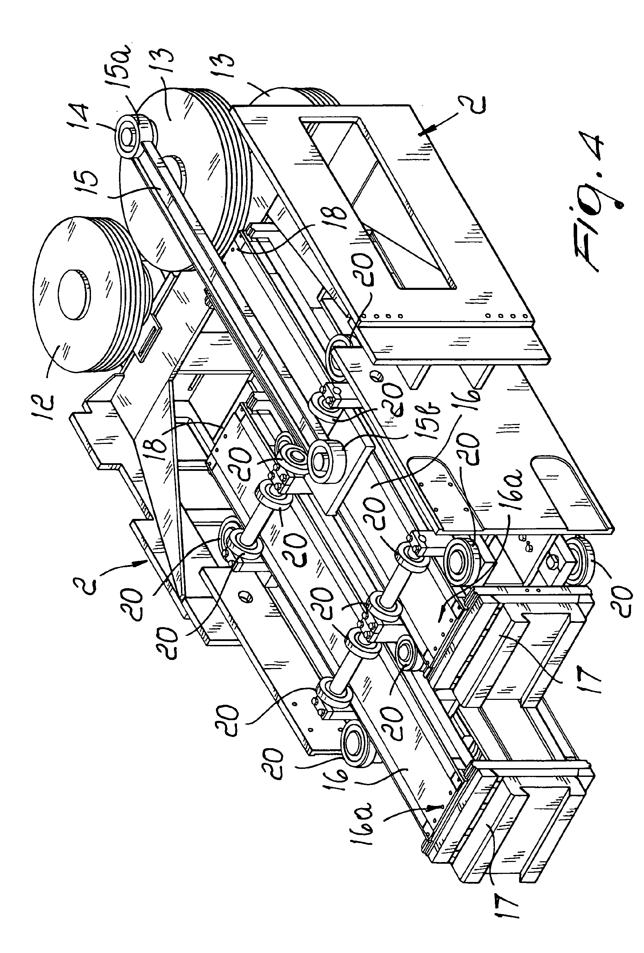

Figure 4 is a perspective view, taken from the inside of the cutting frame, of the portion shown in Figures 2 and 3;

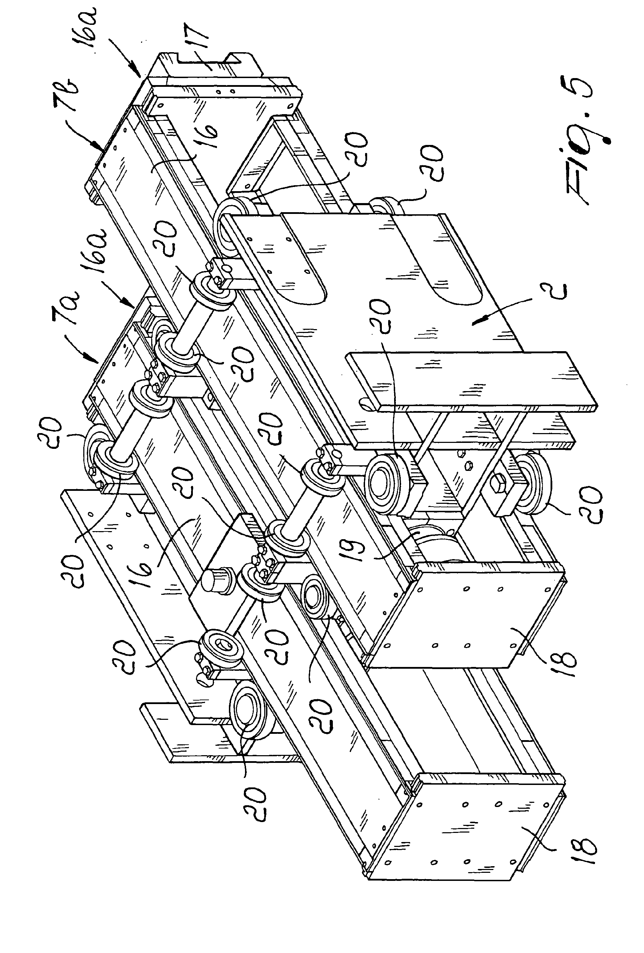

Figure 5 is a perspective view of the same portion, taken from the outside of said frame; and
Figure 6 is a perspective view of a cutting frame according to the invention.

In the examples of embodiments that follow, individual characteristics, given in relation to specific examples, may actually be interchanged with other different characteristics that exist in other examples of embodiment.

Moreover, it is noted that anything found to be already known during the patenting process is understood not to be claimed and to be the subject of a disclaimer.

With reference to the figures, a cutting frame according to the invention, generally designated by the reference numeral 1, comprises a supporting framework 2 for at least two cutting blades 3.

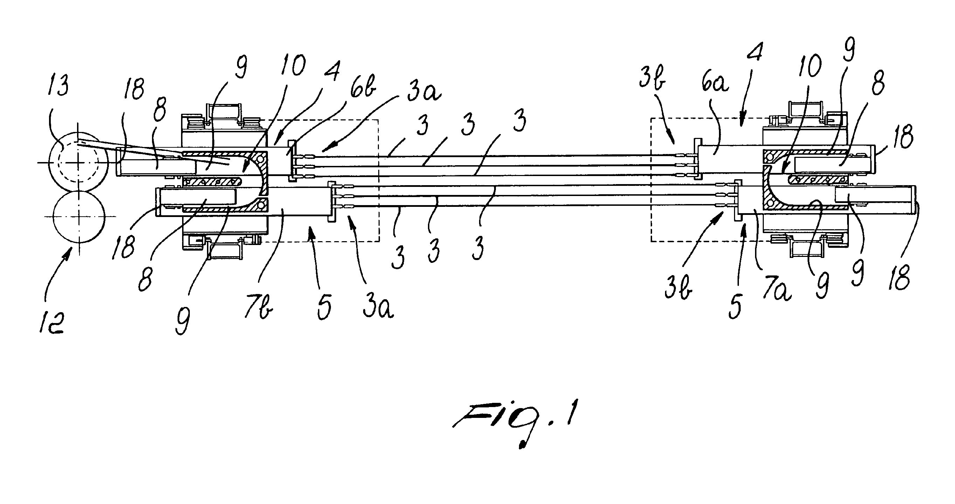

The cutting frame 1 is constituted by a first blade holder assembly 4 and by a second blade holder assembly 5, each of which is designed to support at least one respective blade 3. In particular, in the diagram shown in Figure 1, the first blade holder assembly 4 and the second blade holder assembly 5 support three blades 3 each.

The first blade holder assembly 4 is provided with two connecting devices 6a and 6b, each of which is designed to anchor respective axial end portions 3a of the blade or blades 3 supported by said first blade holder assembly 4.

In a fully similar manner, the second blade holder assembly 5 also has two connecting devices 7a and 7b.

The connecting devices 6a and 6b, 7a and 7b are supported by the supporting framework 2 so that they can move with a back-and-forth translational motion in a direction that is substantially parallel to the extension of the blades 3.

Each one of the connecting devices 6a and 6b, 7a and 7b is associated with (and accordingly moved by) a tensioning and movement piston 8, which can slide within a respective tensioning and movement chamber 9.

According to the present invention, a cutting frame 1 has means 10 for fluid connection between the tensioning and movement chambers 9 that are associated with corresponding connection devices 6a, 7a, 6b, 7b.

In greater detail, a cutting frame 1 is provided with motor means 11 for actuating one of the four pistons 8.

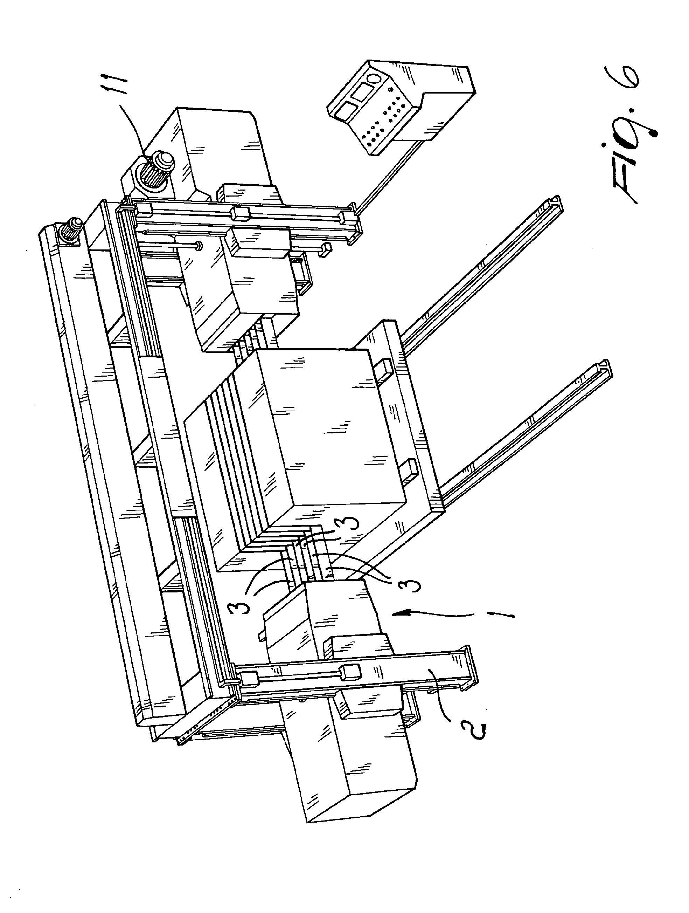

According to the kinematic diagram shown in Figure 1 and to the embodiment shown in Figure 6, the actuation motor means 11 can be constituted advantageously by a motor for moving two transmission flywheels 12, each of which is kinematically connected to a flywheel 13 that is connected, at a coupling portion 14 thereof, to a first end 15a of a linkage 15.

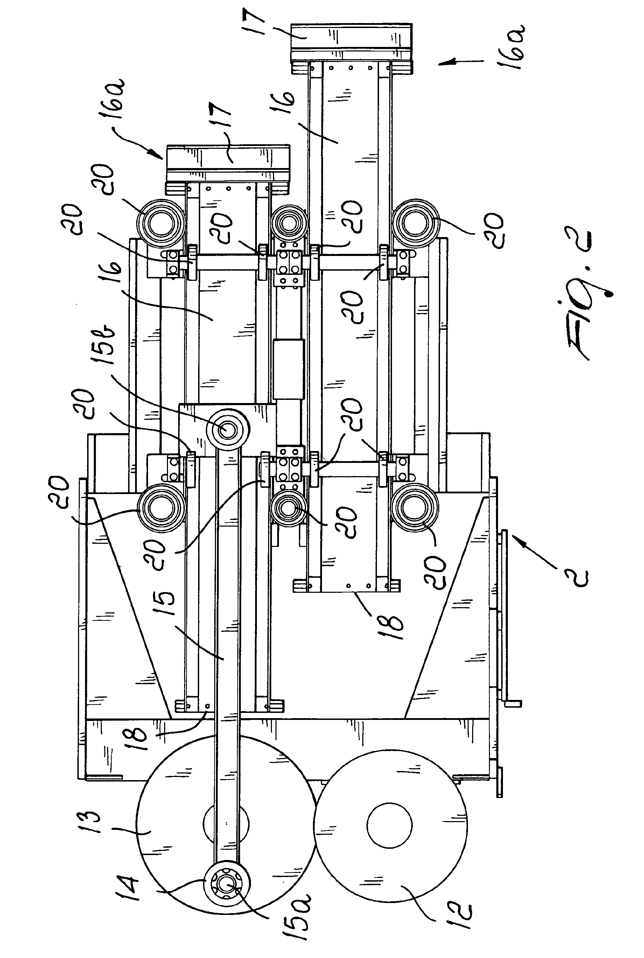

With reference to Figure 2, the linkage 15 is connected, at the second end 15b, to one of the connecting elements 6a, 6b, 7a, 7b.

Conveniently, the connecting devices 6a, 6b, 7a, 7b can be constituted respectively by a carriage element 16, which supports, at a first terminal portion 16a, an engagement device 17, for example of the dovetail type, which is adapted to allow anchoring of the axial end portions 3a and 3b of the blades 3.

The carriage element 16 supports, at a second substantially terminal portion 16b, an abutment element 18, which lies advantageously on a plane that is perpendicular to the longitudinal axis of the blades 3.

Also according to the invention, the abutment element is moved by at least one respective tensioning stem 19, which is associated with each tensioning and movement piston 8.

Conveniently, the tensioning stem 19 can be connected to the respective abutment element 18 by interposing a coupling that allows to avoid transferring to the tensioning stem 19 the stress components that lie on the plane of arrangement of the abutment element 18.

A guiding device is interposed between the carriage element 16 and the supporting framework 2 and is constituted for example by a plurality of bearings 20, which are arranged so as to allow their rotation about axes that are perpendicular to the back-and-forth direction of the carriage element 16.

In greater detail, the fluid connection means can be constituted by a curved duct, which is designed to connect the tensioning and movement chambers 9.

In particular, if, as frequently occurs, said chambers are filled with oil, the fluid connection means comprise a duct that contains oil and accordingly provides a hydraulic connection.

With reference to the figures, it can be seen that the particular structure of the engagement device 17 allows to fix one or more blades to each one of the blade holder assemblies 4 and 5, at the same time allowing to space the blades one another at will.

Even if the resulting force is not axially aligned with the respective tensioning and movement piston 8, any flexural moment in fact would be discharged onto the carriage element 16 and, by means of the bearing elements 20, onto the supporting framework 2.

Operation of a cutting frame 1 according to the present invention is evident from what has been described above.

In particular, by the actuation motor means 11, one of the four connecting elements (the connecting element 6b, in the illustrated example) is moved and, by being connected to the respective tensioning and movement piston, entrains it, making it slide within the tensioning and movement chamber 8 and also moving the other connecting elements.

All the characteristics of the invention described above as advantageous, convenient or the like may also be omitted or replaced with equivalents.

The invention thus conceived is susceptible of numerous modifications and variations, all of which are within the scope of the appended claims.

Thus, for example, the actuation motor means 11 may be any and may even be constituted by a rack device.

According to another embodiment, which is conceptually similar, the tensioning and movement chambers 9 (and accordingly the fluid connection means) may be arranged on the opposite side of the abutment elements 18 (with respect to the blades 3).

In practice it has been found that the apparatus thus described can operate easily by using a single motor yet achieves a substantially doubled productivity.

The arrangement of the fluid connection means in fact allows to use the pressure generally used exclusively for blade tensioning in order to move a second set of blades, thus doubling the number of cuts per pass.

Furthermore, as clearly evident from what has been described above, any axial misalignments of the blades with respect to the respective tensioning and movement pistons do not stress the stems of the pistons but are discharged onto the supporting framework.

Moreover, it should be noted that in the case of opposite axial misalignments between the first blade holder assembly and the second blade holder assembly, the overall flexural moment on the supporting frame is canceled out.

In practice, the materials used, as well as the contingent shapes and dimensions, may be any according to requirements.

All the details may further be replaced with other technically equivalent elements.

The disclosures in Italian Patent Application no. VR2003A000111, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A cutting frame particularly for blocks of stone or the like, comprising a supporting framework for at least two cutting blades and means for moving said at least two cutting blades with respect to the blocks being worked, **characterized in that** it comprises a first blade holder assembly and a second blade holder assembly, which respectively comprise two devices for connection to respective axial end portions of at least one respective blade, said connection devices being supported by said supporting framework and being movable with a back-and-forth translational motion in a direction that is substantially parallel to the extension of said at least one respective blade, each one of said connection devices being associated with at least one respective tensioning and movement piston, which can slide within a respective tensioning and movement chamber, tensioning and movement chambers associated with said connection devices for connecting corresponding end portions being connected by way of fluid connection means.

2. The cutting frame according to claim 1, **characterized in that** it comprises motor means for actuating one of said connection devices.

3. The cutting frame according to one or more of the preceding claims, **characterized in that** said connection devices comprise a carriage element that supports, at a first terminal portion, an engagement device for said axial end portion of said at least one blade and supports, substantially at a second terminal portion, an abutment element for a tensioning stem that is connected to said actuation and movement piston.

4. The cutting frame according to one or more of the preceding claims, **characterized in that** it comprises a guiding and supporting device, which is interposed between said carriage element and said supporting frame.

5. The cutting frame according to one or more of the preceding claims, **characterized in that** said fluid connection means comprise hydraulic connection means.

6. The cutting frame according to one or more of the preceding claims, **characterized in that** said guiding and supporting device comprises a plurality of bearings.

7. The cutting frame according to one or more of the preceding claims, **characterized in that** said hydraulic connection means comprise a curved duct, which is adapted to connect the oil contained in the two tensioning and movement chambers connected to said hydraulic connection means.

8. The cutting frame according to one or more of the preceding claims, **characterized in that** it comprises means for adjusting the pressure of the fluid inside said tensioning and movement chambers and said fluid connection means.
